(19) Europäisches Patentamt
European Patent Office
Office européen des brevets

(11) Publication number : **0 349 232 B1**

# (12) EUROPEAN PATENT SPECIFICATION

(45) Date of publication of patent specification : **19.05.93 Bulletin 93/20**

(51) Int. Cl.$^5$ : **C08F 293/00**

(21) Application number : **89306435.2**

(22) Date of filing : **26.06.89**

## (54) Acrylic copolymers and method of making the same.

(30) Priority : **28.06.88 US 212593**

(43) Date of publication of application : **03.01.90 Bulletin 90/01**

(45) Publication of the grant of the patent : **19.05.93 Bulletin 93/20**

(84) Designated Contracting States : **AT BE CH DE ES FR GB IT LI NL SE**

(56) References cited :
**EP-A- 0 286 376**
**PATENT ABSTRACTS OF JAPAN, vol. 13, no. 151 (C-584)[3499], 12th April 1989**

(73) Proprietor : **MINNESOTA MINING AND MANUFACTURING COMPANY**
**3M Center, P.O. Box 33427**
**St. Paul, Minnesota 55133-3427 (US)**

(72) Inventor : **Milton, H. Andrus, Jr. c/o Minnesota Mining and**
**Manufacturing Company 2501 Hudson Road**
**St. Paul Minnesota 55144-1000 (US)**
Inventor : **Mahfuza, B. Ali c/o Minnesota Mining and**
**Manufacturing Company 2501 Hudson Road**
**St. Paul Minnesota 55144-1000 (US)**
Inventor : **Olsen, Roger A. c/o Minnesota Mining and**
**Manufacturing Company 2501 Hudson Road**
**St. Paul Minnesota 55144-1000 (US)**

(74) Representative : **Baillie, Iain Cameron et al**
**c/o Ladas & Parry, Altheimer Eck 2**
**W-8000 München 2 (DE)**

**EP 0 349 232 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

### Technical Field

This invention relates to acrylic block copolymers and a method of making the same.

### Background Art

Various methods of producing acrylic block copolymers are known. Acrylic monomers which have been polymerized randomly by conventional thermal initiation techniques to produce polymers which may be formed into films or sheets or used as protective coatings have been known for many years. The inherent resistance of acrylic polymers to oxidation endows films, sheets and coatings of such polymers with good aging and weatherability properties. The films for the most part are clear, making them suitable for certain optical applications. Acrylic copolymers have also been widely used in adhesive applications and in particular as pressure-sensitive adhesives. The combination of monomers are, of course, diametrically different from those required of acrylic copolymers that are to be used to make films and protective coatings.

It is generally recognized that control of the polymerization to produce a block copolymer is desired in the production of useful copolymers. Control has not always been an easy task according to prior art methods.

### Disclosure of the Invention

The present invention provides acrylic block copolymers and a method of making the same by utilization of an iniferter as a means of promoting, controlling and terminating polymerization of the copolymer.

The term "iniferter" refers to a chemical compound that has a combined function of being a free radical initiator, transfer agent, and terminator, the term "iniferter" being a word formed by the underlined portions of the terms identifying these functions. This term and its use in a production of block copolymers is well known, particularly because of the work of Takayuki Otsu of the Department of Applied Chemistry, Osaka City University, Osaka, Japan. This work is discussed, for example, in an article by Otsu et al entitled "Living Radical Polymerizations in Homogeneous Solution by Using Organic Sulfides as Photoiniferters", Polymer Bulletin, 7, 45-50 (1982) and an article by Otsu et al entitled "Living Mono- and Biradical Polymerizations in Homogeneous System Synthesis of AB and ABA Type Block Copolymers", Polymer Bulletin, 11, 135-142 (1984). Despite the rather detailed description of making block copolymers according to such disclosures, there is no disclosure of making the type of acrylic block copolymers herein claimed.

The present invention provides tailor-made acrylic block copolymers. The control of the polymerization provided by the iniferter technology permits "tailoring" of the acrylic block copolymer so that a wide spectrum of physical properties can be introduced. Polymerization is accomplished by sequential polymerization steps.

The acrylic block copolymers of the present invention generally have optical clarity and are resistant to oxidative and photochemical degradation. The acrylic block copolymers of the invention can be used where conventional block copolymers are employed, for example to make shaped articles, sheet materials, and the like. Many of the sheets are clear polymeric films. The films are also quite flexible without being brittle and unexpectedly craze-resistant.

Specifically, the block copolymer is made by a method which has the following steps:

(a) mixing (1) an iniferter represented by the general formula $I(T)_n$ capable upon being subjected to an appropriate energy source of forming free radicals $I(\cdot)_n$ and $nT\cdot$ wherein n is an integer of at least 2, $I\cdot$ is a highly reactive free radical capable of initiating free radical polymerization, and $T\cdot$ is a less reactive free radical which is generally much less capable of initiating free radical polymerization than $I\cdot$ but will rejoin with $I(\cdot)_n$ or a free radical polymer segment free radically polymerized with $I(\cdot)_n$ upon termination of said energy source and (2) a first monomer charge selected from the group consisting of (i) acrylic monomer polymerizable to form an acrylic polymer block having a glass transition temperature of less than 0°C and (ii) monomer polymerizable to form a thermoplastic polymer block having a glass transition temperature of at least 50°C which is free radically polymerizable in the presence of $I(\cdot)_n$ to form a first polymer block;

(b) exposing the mixture of (a) to an energy source capable of forming free radicals $I(\cdot)_n$ and $nT\cdot$;

(c) maintaining the exposure of (b) until said first monomer charge polymerizes with $I(\cdot)_n$ to form a free radical polymer segment represented by the formula $I(B\cdot)_n$ wherein B represents said first polymer block formed of said first monomer charge;

(d) terminating said exposure whereby to cause $I(B\cdot)_n$ and $nT\cdot$ to combine to form a polymer represented by the formula $I(BT)_n$;

(e) mixing $I(BT)_n$ with a second monomer charge which is the member of the group consisting of monomer

(i) and monomer (ii) which was not selected as said first monomer comprising monomer which is free radically polymerizable in the presence of $I(B\cdot)_n$ to a second polymer block;

(f) exposing $I(BT)_n$ to an energy source capable of forming free radicals $I(B\cdot)_n$ and $nT\cdot$;

(g) maintaining the exposure of (f) until said second monomer charge polymerizes with $I(B\cdot)_n$ to form a free radical block copolymer segment represented by the formula $I(BA\cdot)_n$ wherein A represents said second polymer block formed of said second monomer charge; and

(h) terminating the exposure of (f) whereby $I(BA\cdot)_n$ and $nT\cdot$ combine to form a block copolymer represented by the formula $I(BAT)_n$.

The block copolymer of the invention is an ABA type copolymer which can be represented by the general formula $I(BAT)_n$

wherein

I represents a radical derived from the free radical initiator I· of an iniferter of the formula $I(T)_n$ as previously defined;

T represents a radical derived from the free radical terminator T· of iniferter $I(T)_n$

n is an integer of at least 2;

B is a first polymer block selected from the the group consisting of (i) a polymer block having a glass transition temperature of less than 0°C and (ii) a normally thermoplastic polymer block having a glass transition temperature of at least 50°C; and

A is a second polymer block which is the member of the group consisting of polymer block (i) and polymer block (ii) which was not selected as said first polymer block.

The preferred block copolymers are those wherein n is an integer of 2 to 12, most preferably 2 to 6. The weight ratio of acrylic polymer block to thermoplastic polymer block in the copolymer is from 5:95 to 40:60, preferably 10:90 to 30:70.

Preferred block copolymers have an elastomeric block which is formed of monomer comprising from about 75 to 100 percent by weight of at least one monomeric acrylic or methacrylic acid ester of a non-tertiary alcohol, the alcohol having from 1 to 14 carbon atoms with the average number of carbon atoms being 4 to 12. Preferred monomeric acrylic or methacrylic acid ester is selected from the group consisting of 2-butyl acrylate, isooctyl acrylate, 2-ethylhexyl acrylate, 2-methylbutyl acrylate and n-butyl acrylate.

The preferred monomeric material from which the thermoplastic polymer block is formed is selected from the group consisting of methyl methacrylate, polystyrylethyl methacrylate macromer, methyl methacrylate macromer, acrylic acid, acrylonitrile, isobornyl methacrylate, N-vinyl pyrrolidone, t-butyl methacrylate, isopropyl methacrylate, and mixtures thereof.

The preferred block copolymers according to the present invention include those which may be represented by the general formula

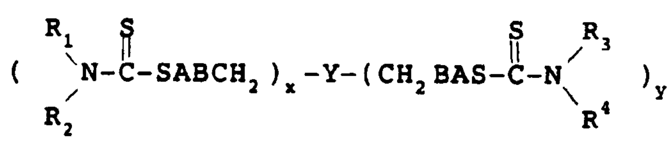

wherein

$R_1$, $R_2$, $R_3$ and $R_4$ are aliphatic, aromatic, or substituted aromatic moieties (preferably $C_{1-4}$ aliphatic moieties), which can be the same or different and which do not substantially interfere with the ability of I· to promote free radical polymerization or with T· to recombine with I· or a polymer free radical segment including I·;

Y is a linking group having a functionality of x+y which does not substantially interfere with the ability of I· to promote free radical polymerization or the ability of T· to recombine with I· or a polymer free radical segment including I·; and

x and y are each integers of at least 1 and the sum of x+y is not more than 12.

The most preferred block copolymers according to the invention are those represented by the formula

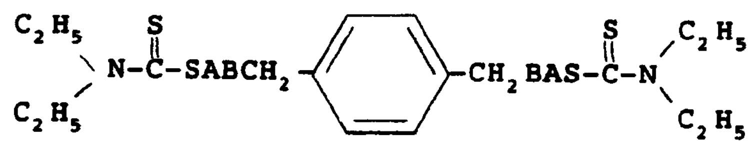

The most preferred iniferters for producing the ABA block copolymers according to the present invention are selected from the group consisting of xylylene bis (N,N-diethyl dithiocarbamate) and xylylene bis (N-carbazolyl dithiocarbamate).

Best Mode for Carrying Out The Invention

The acrylic monomer of the elastomeric block as previously mentioned, is a monomeric acrylic or methacrylic acid ester of a non-tertiary alcohol, said alcohol having from 1 to 14 carbon atoms with the average number of carbon atoms being about 4-12. Examples of such monomers include the esters of acrylic acid or methacrylic acid with non-tertiary alkyl alcohols such as 1-butanol, 1-pentanol, 2-pentanol, 3-pentanol, 2-methyl-1-butanol, 1-methyl-1-butanol, 1-methyl-1-pentanol, 2-methyl-1-pentanol, 3-methyl-1-pentanol, 2-ethyl-1-butanol, 3,5,5-trimethyl-1-hexanol, 2-ethyl hexanol, 3-heptanol, 2-octanol, 1-decanol, 1-dodecanol, and the like. Such monomeric acrylic or methacrylic esters are known in the art and many are commercially available.

The elastomeric block may include as a comonomer a macromolecular monomer, sometimes referred to as a "macromer". Such a monomer may also be included in the thermoplastic polymer block as a comonomer. Such a monomer is a polymeric material having a copolymerizable vinyl group with which the acrylic monomer and other monomers (if more than one is used) will copolymerize under the polymerization conditions.

The vinyl-terminated polymeric monomers useful in the present invention are known and may be prepared by the method disclosed by Husman et al, U.S. Pat. No. 4,554,324 describes the preparation of the vinyl-terminated polymeric monomers. The most preferred macromolecular monomers include polystyrylethyl methacrylate macromer and polymethyl methacrylate macromer.

According to Husman, such monomers are known and may be prepared by the method disclosed by Milkovich et al as described in U.S. Pat. Nos. 3,786,116 and 3,842,059. As disclosed therein, vinyl-terminated polymeric monomer is prepared by anionic polymerization of a polymerizable monomer to form a living polymer. Such monomers include those having an olefinic group, such as the vinyl-containing compounds. Living polymers are conveniently prepared by contacting the monomer with an alkali metal hydrocarbon of alkoxide salt in the presence of an inert organic diluent which does not participate in or interfere with the polymerization process. Monomers which are susceptible to anionic polymerization are well known. Illustrative species include vinyl aromatic compounds such as styrene, alpha-methylstyrene, vinyltoluene and its isomers. Other monomers susceptible to anionic polymerization are also useful.

The initiators for anionic polymerization may be any of the alkali metal hydrocarbons of alkoxide salts which produce a mono-functional living polymer, i.e., only one end of the polymer contains a reactive ion. Such initiators include the hydrocarbons of lithium, sodium or potassium, for example, having an alkyl radical containing up to 20 carbon atoms or more, and preferably up to 8 carbon atoms. Illustrative alkali metal hydrocarbons include ethylsodium, propylsodium, butylpotassium, octyl-potassium, phenylsodium, ethyllithium, butyllithium, sec-butyllithium, isobutyllithium, tertbutyllithium and 2-ethylhexyllithium. Sec-butyllithium is the preferred initiator.

The inert organic diluent utilized to facilities heat transfer and adequate mixing of the initiator and monomer preferably is a hydrocarbon or an ether. Useful diluents include saturated aliphatic and cycloaliphatic hydrocarbons such as hexane, heptane, octane, cyclohexane and the like. In addition, aliphatic and cyclic ether solvents may be used, for example, dimethyl ether, diethyl ether, and tetrahydrofuran.

The amount of initiator usually dictates the molecular weight of the living polymer. If a small portion of initiator is used, with respect to the amount of monomer, the molecular weight of the living polymer will generally be larger than if a large portion of initiator is used. It is generally advisable to add initiator dropwise to the monomer until the persistence of the characteristic color of the organic anion is observed, then the calculated amount of the initiator is added for the molecular weight desired. The preliminary dropwise addition serves to destroy contaminants and thus permits better control of the polymerization. Generally, the initiator concentration can vary from about 0.01 to about 0.1 mole of active alkali metal per mole of monomer, or higher. Preferably, the concentration of the initiator will be from about 0.01 to about 0.04 mole of active alkali metal per mole of monomer.

The temperature of the polymerization will depend upon the monomer. Generally, the reaction can be carried out at a temperature ranging from about -100°C. up to about 100°C.

The anionic polymerization must be carried out under controlled conditions so as to exclude substances which destroy the initiator or living anion. Water and oxygen must be excluded. The polymerization therefore is carried out under anhydrous conditions in an inert atmosphere such as nitrogen, helium or argon.

The living polymers may be terminated in several ways. It is important, however, that conditions be selected to provide a quantitative termination free from side reactions. Under certain conditions the living polymeric anion may be allowed to react directly with halogen-containing terminating agents to produce, for example, vinyl-terminated polymeric monomers. In many cases, however, the polymeric anion is highly reactive and non-selective in its reaction with the terminating agent. In addition to displacement of the halogen atom, it may abstract hydrogen atoms or react with other functional groups present, including the vinyl group itself. This results in polymer chains which are non-functional or of unwanted functionality and molecular weight. Occasionally, under these conditions, a vinyl-terminated polymer may be attached by living anion and its functionality destroyed.

One means for overcoming the foregoing problem is to render the living anion less reactive, thus less susceptible to side reactions, by "capping" with a less reactive end group prior to actual termination. Examples of suitable "capping agents" include lower alkylene oxides such as ethylene and propylene oxide, and 1,1-diphenyl-ethylene, etc. A preferred capping agent is an alkylene oxide, such as ethylene oxide. The capping agent reacts with the living polymer, destroying its oxirane ring. The alkoxide anion then displaces the halogen atom of the terminating agent selectively, leaving the vinyl group intact.

The capping reaction is carried out quite simply, as in the case of the terminating reaction, by adding the capping reactant to the living polymer at the polymerization temperature. The reaction occurs immediately. As in the case of the termination reaction, a slight molar excess of the capping reactant with respect to the amount of initiator may be used. The reaction occurs on a mole for mole basis. This reaction is described in Milkovich, U.S. Pat. No. 3,842,059. According to U.S. Pat. No. 3,842,059, reaction with the terminating agent provides the desired vinyl-terminated polymeric monomer.

A second method of termination, also useful for synthesis of the vinyl-terminated polymeric monomers, involves capping the living anion performed as described previously, and the protonating the alkoxide ion to produce a hydroxyl-terminated polymer. The hydroxyl group is then allowed to react with a terminating agent containing an isocyanate group (instead of a halogen atom) to produce the vinyl termination. Suitable terminating agents for this reaction are isocyanato alkyl acrylates and methacrylates having 1 to 4 carbon atoms in the alkyl group. The hydroxyl and isocyanato groups react to form a urethane linkage between the polymeric segment and the "monomeric" end group. Intermediate protonation of the alkoxide is necessary to prevent unwanted side reactions upon termination.

Although U.S. Pat. No. 3,786,116 teaches that the molecular weight distribution of the polymer chains of the vinyl-terminated polymericmonomer prior to copolymerization must be narrow, i.e., less than 1.1 polydispersity, it has been found that useful psa compositions according to the present invention may employ polymeric monomer having a polydispersity of up to about 3 without deleterious effects on the adhesive properties. These broader molecular weight distributions may be obtained by known variations in temperature of polymerization and the lithium alkali initiator used.

The vinyl-terminated polymeric monomers useful in the present invention may also be prepared be free-radical polymerization (rather than anionic polymerization). Known methods can be used to prepare semi-telechelic polymers using thermal free-radical initiators. An illustrative method is described in Y. Yamashita, K. Ito, H. Mizuno and H. Okada, Polymer Journal 14, 255-260 (1982) and K. Ito, N. Usami, and Y. Yamashita, Macromolecules 13,216-221 (1980). These functional polymers can then be converted into vinyl-terminated monomers using standard condensation chemistry, ring opening reactions, etc. Specifically, carboxylic-acid terminated low molecular weight polystyrene can be prepared using 4,4'-azobis-(4-cyanovaleric acid) as an initiator and an acid-containing chain transfer agent such as $HS-CH_2-COOH$. The semi-telechelic polystyrene can then be vinyl terminated via, for example, ring opening of glycidyl methacrylate. These vinyl-terminated polymers have a high polydispersity.

It should be understood that minor amounts of the monomer forming the B block, the monomer forming the A block, or both may be present as a homopolymer in the copolymer thermoplastic composition of the invention. Such minor amounts of homopolymer may be produced in an unwanted side reaction during polymerization of the copolymer. Such amounts will typically be less than 10 parts by weight of all homopolymer based upon 100 parts by weight of copolymer.

The copolymerization of the low $T_g$ acrylic monomer, and the high $T_g$ monomer to produce the thermoplastic block copolymer is by step-wise free radical polymerization. The low $T_g$ acrylic monomer is dissolved in a suitable inert solvent, if needed, and polymerized by a first free radical polymerization utilizing a suitable iniferter as a free radical initiator source. Generally, from about 0.01 to about 5 percent by weight of iniferter

based upon the total weight of polymerizable composition is used.

The iniferter is caused to dissociate to form free radicals by exposure to an appropriate energy source. The preferred iniferter is one which will dissociate upon exposure to a radiant energy source, most preferably an ultraviolet radiant energy source. upon exposure to the energy source, the iniferter dissociates to form free radicals which promote free radical polymerization. Upon completion of the free radical polymerization of the first monomer charge, e.g., the acrylic low $T_g$ monomer, the energy source is discontinued to permit the free radically polymerized segments to recombine with the terminator portion of the iniferter to form polymer segments. The second monomer charge is then introduced, which for example is polymerizable to the high $T_g$ thermoplastic polymer block, and the new mixture is exposed to the energy source to cause dissociation of the terminator radical and free radical polymerization of the second monomer charge onto the first polymer segment, that now being the initiator of the second free radical polymerization. Upon completion of polymerization of the second monomer charge, the energy source is terminated and the terminator portion of the iniferter recombines with the high $T_g$ thermoplastic polymer block to provide a block copolymer.

The particular energy source and its intensity are selected to result in dissociation of the iniferter to free radicals. When employing a photoiniferter which will dissociate upon exposure to ultraviolet light radiation, an ultraviolet light source is utilized. The intensity and rate of irradiation are chosen to advance the polymerization at a reasonable rate without deleteriously affecting the polymer segment being produced. An ultraviolet light source having a wave length on the order of 300 to 400 nm spaced approximately 10 cm from the reactants to provide an exposure of 2 mw per square centimeter has been found to produce suitable results. Reaction times on the order of 2 to 50 hours have been found to be typical, depending upon the intensity of the radiation, with faster reaction times being observed at greater intensities.

The reactants and any solvent employed are charged into an energy source-transparent vessel and therein subjected to the energy source. If the energy source is ultraviolet light radiation, a suitable ultraviolet light-transparent vessel is utilized.

The reaction is preferably conducted in a vessel with agitation to permit uniform exposure of the reactants to the energy source. While most of the reactions have been conducted by employing a batch process, it is possible to utilize the same technology in a continuous polymerization operation.

The reaction mixture may include a suitable inert solvent but it is not necessary since some of the monomeric materials are liquid themselves and may thus be charged into the reaction vessel without utilization of a solvent.

The solvent, if utilized in the free radical polymerization, may be any substance which is liquid in a temperature range of about -10°C to about 50°C, is substantially transparent to the energy source employed to permit dissociation of the iniferter to form free radicals, is inert to the reactants and product, and will not otherwise adversely affect the reaction. Suitable solvents include water, alkyl acetates such as ethyl acetate, alkanes such as hexane or heptane, and alcohols such as methyl alcohol, ethanol, ispropyl alcohol, and mixtures of one or more of these. Other solvent systems are useful. The amount of solvent is generally about 30 to 80 percent by weight based on the total weight of the reactants and solvent. In addition to solution polymerization herein described, the copolymerization may be carried out by other well known techniques such as suspension, emulsion and bulk polymerization.

The copolymer may, when necessary or desirable, be blended with a compatible modifier in order to optimize physical properties. The use of such modifiers is common in the art. For example, it may be desirable to include such materials as pigments, fillers, stabilizers, or various polymeric additives.

The copolymers prepared in accordance with the present invention are easily shaped by conventional techniques and equipment to produce shaped articles, sheet goods, or other useful shapes.

It should be noted that, while the polymers of the present invention have improved toughness without subsequent cross-linking, if necessary, further solvent resistance and resistance to photochemical or oxidative forces may be obtained by cross-linking by employing radiant energy or chemical procedures.

## Examples

The following detailed description includes exemplary preparations of ABA acrylic block copolymers in accordance with the invention. All parts and percentages in the examples are by weight unless otherwise specified.

## Definitions of Terms

The number-average molecular weight ($M_n$), and weight-average molecular weight ($M_w$), are well known mathematical descriptions of the molecular weight distribution of a polymer sample.

Each of the foregoing is a well known term used by polymer chemists and others. Further explanation of the derivation of these terms may be found in Experimental Methods in Polymer Chemistry, Wiley and Sons, 1981, Chapter 3 entitled "Molecular Weight Averages", pages 57-61.

The block copolymers of the present invention are described in a short-hand way depending upon the monomer forming each block. For example, MMA-b-BA-b-MMA refers to a copolymer having block ("b") of polymerized methyl methacrylate ("MMA") and a block of polymerized butyl acrylate ("BA"). For example, MMA-b-BA-b-MMA refers to an ABA block copolymer having two A (polymethyl methacrylate) blocks and a single B midblock (poly-butyl acrylate).

## Test Methods

The test methods used to evaluate the block copolymers of the examples are industry standard tests. The test methods which characterize the polymers of this invention are those which demonstrate its molecular architecture. The gel permeation chromatography (GPC), inherent viscosity (I.V.) modulus, percent elongation, and tensile strength measurement results have been obtained. The standard tests are described in detail in various publications of the American Society for Testing and Materials (ASTM), Philadelphia, Pa. The standard test methods are described in detail below. The reference source of each of the standard test methods is also given.

## Gel Permeation Chromatography

The characterization of the molecular weight distribution of the polymers has been by conventional gel permeation chromatography (GPC).

A Hewlett-Packard Model 1084B, high performance liquid chromatograph equipped with Styragel™ columns was used. The system was calibrated using polystyrene standards. All molecular weight averages are polystyrene equivalent molecular weights. The molecular weight averages and polydispersities were calculated according to accepted practices. GPC test methods are further explained in "Modern Size Exclusion Liquid Chromatography" Practice of Gel Permeation Chromatography, John Wiley and Sons, 1979.

## Modulus - Elongation- Tensile Measurements

The mechanical properties of the toughened, non-brittle, thermoplastic films formed from the copolymers of this invention were measured according to the procedures established by the American Standard Test Methods (ASTM) which can be found under the designations: D-412-83, "Rubber Properties in Tension" and D 638M-84, "Tensile Properties of Plastics".

Preparation of films for test purpose: Films were cast from solution upon a substrate which permitted subjecting the film to 16 hours of drying in a vacuum oven at 50°C. The film thus formed was cut to standard dumbbell shapes to provide test samples for insertion in the jaws of an Instron™ tensile test instrument where it was tested under ambient conditions in a testing room controlled at 23°C and a humidity of 50%.

The prescribed dumbbell-shaped specimens were stretched at a constant rate to the breaking point. The tensile strength at break was recorded. The elongation was expressed as a percentage of the original length. The modulus (Stiffness) and tensile strength were calculated based on the following formulae where "force" is expressed in Newtons (N), linear dimensions in meters and the modulus and tensile units are expressed as megaPascals (MPa).

$$\text{Tensile} = \frac{\text{Force}}{\text{Width x Thickness}}$$

$$\text{Modulus} = \frac{\text{Force x Initial Length}}{\text{Width x Thickness x Final Length}}$$

$$\text{\% Elongation at break} = \frac{\text{final length} - \text{original length x 100}}{\text{original length}}$$

## Inherent Viscosity Measurement

The inherent viscosity is measured by conventional means using a Cannon-Fenske #50 viscometer in a water bath controlled at 25°C to measure the flow time of 10 ml of a polymer solution (0.2 g per deciliter polymer in methyl ethyl ketone). The examples and comparative examples were run under identical conditions. It is the comparative values which are significant and absolute figures are not required.

Example 1

MMA-b-BA-b-MMA

A cylindrical reaction bottle was charged with 36 grams of butyl acrylate (BA), 0.2 grams of xylylene bis (N,N-diethyl-dithiocarbamate) (XDC) and 21.3 grams of ethyl acetate. The mixture was purged with nitrogen for 10 minutes before sealing and placing the sealed bottle in a roller mechanism. The rotating, sealed bottle was exposed for 39 hours to ultraviolet radiation from General Electric 15 watt black light lamp. At this point, the ultraviolet source was turned off, the reaction bottle was unsealed then 65.6 grams of methyl methacrylate (MMA) and 21.3 grams of ethyl acetate were added to the polymerized butyl acrylate. Purging for 10 minutes with nitrogen followed before the reaction bottle was re-sealed and placed in the roller mechanism for further exposure to ultraviolet radiation which continued for 66 hours. The resulting triblock copolymer solution was removed. The composition of the resultant polymer was determined by NMR spectroscopic analysis. A thin film was cast and dried to be subjected to mechanical tests. The results of these tests are reported in Table I, Example 1.

Examples 2, 3, 4 and 5

The procedure of Example 1 was followed. The same monomers were charged but at different ratios and the exposure to ultraviolet and the amount of photoiniferters was varied. The resulting range of molecular weights and inherent viscosities show how modulus, elongation and tensile performance of the toughened thermoplastic film can be altered.

**Table I**

**Segmented Triblock Copolymers**
**MMA-b-BA-b-MMA**

| | | | | Performance Data | | |
|---|---|---|---|---|---|---|
| Ex. | Composition BA/MMA | Molecular Weight | I.V. (dl/g) | Modulus (MPa) | Elong. (%) | Tensile (MPa) |
| 1 | 35/65 | 167,790 | 0.71 | 1,054 | 4 | 29.1 |
| 2 | 29/71 | 182,345 | -- | 939 | 5 | 30.5 |
| 3 | 31/69 | 100,889 | -- | 1,239 | 7 | 38.8 |
| 4 | 38/62 | 109,188 | 0.47 | 738 | 17 | 24.2 |
| 5 | 30/70 | 94,600 | 0.48 | 659 | 21 | 25.0 |

Examples 6, 7, 8 and 9

The preparation of these segmented triblock copolymers of 2-butyl acrylate (2-BA) and methyl methacrylate (MMA) were carried out by the procedure described in Example 1. The photoiniferter was xylylene bis (N,N diethyl-dithiocarbamate) (XDC). The exposure to ultraviolet radiation was in the same range. The results of the mechanical tests performed on dried thin films of these copolymers cast from solvent are reported in Table II.

**Table II**

**Segmented Triblock Copolymers MMA-b-2-BA-b-MMA**

| Ex. | 2-BA/MMA | Molecular Weight | I.V. (dl/g) | Performance Data Modulus (MPa) | Elong. (%) | Tensile (MPa) |
|---|---|---|---|---|---|---|
| 6 | 38/62 | 119,889 | 0.55 | 756 | 25 | 25.8 |
| 7 | 28/72 | 111,564 | 0.53 | 1,080 | 29 | 24.5 |
| 8 | 35/65 | 60,208 | 0.75 | 710 | 21 | 25.8 |
| 9 | 32/68 | 70,785 | 0.54 | 842 | 10 | 29.9 |

Comparative Examples of Random Thermoplastic Polymer by Thermal Technique

BA/MMA

Example A

A solution of monomers was prepared by charging 10 grams of butyl acrylate (BA) monomer; 90 grams of methyl methacrylate (MMA) monomer; 0.3 grams of 2,2'-azobis (isobutyronitrile) initiator (commercially available as VAZO 64™) and 100 grams of ethyl acetate solvent to a reactor bottle. The charged bottle was purged with nitrogen to remove oxygen, then sealed and placed in a rotating water bath where it was tumbled for 24 hours at 60°C to complete conversion measured by nuclear magnetic resonance (NMR) technique. The resulting random copolymer solution was removed from the reaction bottle. A thin film was cast and dried then subjected to mechanical tests. The results of these tests are reported to Table III, Example A.

Examples B and C

The preparation of these random copolymers by conventional thermal techniques was carried out using the same procedure used to prepare Example A. The amount of the soft butyl acrylate (BA) monomer was raised from initial 10 parts to 50 parts with the corresponding decrease from 90 parts of methyl methacrylate (MMA) to 50 parts. The molecular weight ranges and the inherent viscosities varied due to the conditions of polymerization.

**Table III**

**Non-Segmented -- Random Copolymers**

| Ex. | Composition BA/MMA | Molecular Weight | I.V. (dl/g) | Performance Data Modulus (MPa) | Elong. (%) | Tensile (MPa) |
|---|---|---|---|---|---|---|
| A | 10/90 | 147,583 | 0.61 | 1,657 | 3 | 60.1 |
| B | 30/70 | 132,001 | 0.69 | 1,136 | 2.7 | 37.4 |
| C | 50/50 | 108,375 | 0.76 | 439 | 183 | 11.8 |

Table III shows the advantages of segmented copolymers of Tables I and II over the random, non-segmented, otherwise similar butyl acrylate (BA) and methyl methacrylate (MMA) copolymers. For example, when the random 30:70 BA:MMA of Table III is compared to the lower molecular weight (111,564) example 28:72 of Table II its elongation of only 2.7% is in sharp contrast to almost 30% elongation of triblock MMA/2-BA/MMA of the invention. This clearly demonstrates the effectiveness of imparting flexibility by having BA contributing its rubber properties in block-form which does not significantly reduce the modulus.

While this invention has been described in connection with specific embodiments, it should be understood that it is capable of further modification. The claims herein are intended to cover those variations which one skilled in the art would recognize as the chemical equivalent of what has been described here.

## Claims

1. A copolymer characterized by the general formula $I(BAT)_n$
wherein
I represents the free radical initiator portion of an iniferter of the formula $I(T)_n$;
T represents the termination portion of said iniferter;
n is an integer of at least 2;
B represents a first polymer block selected from the group consisting of (i) an elastic acrylic polymer block having a glass transition temperatures of less than 0°C; and (ii) a normally thermoplastic polymer block having a glass transition temperature of at least 50°C; and
A represents a second polymer block selected from the group consisting of polymer block (i) and polymer block (ii) which was not selected as said first polymer block
the weight ratio of said acrylic polymer block to said thermoplastic block in said block copolymer being from 5:95 to 40:60.

2. The copolymer of claim 1 further characterized by said elastic acrylic polymer block being formed of a monomer comprising at least one monomeric acrylic or methacrylic acid ester of a non-tertiary alcohol, said alcohol having from 1 to 14 carbon atoms with the average number of carbon atoms being 4 to 12.

3. The copolymer of claim 2 further characterized by the selection of said monomeric acrylic or methacrylic acid ester from the group consisting of 2-butyl acrylate, isooctyl acrylate, 2-ethylhexyl acrylate, 2-methylbutyl acrylate, and N-butyl acrylate.

4. The copolymer of claim 1 further characterized by the formation of said thermoplastic polymer block of monomer selected from the group consisting of methyl methacrylate, polystyrylethyl methacrylate macromer, methyl methacrylate macromer, acrylic acid, acrylonitrile, isobornyl methacrylate, N-vinyl pyrrolidone, t-butyl methacrylate, isopropyl methacrylate and mixtures thereof.

5. The copolymer of claim 1 represented by the formula

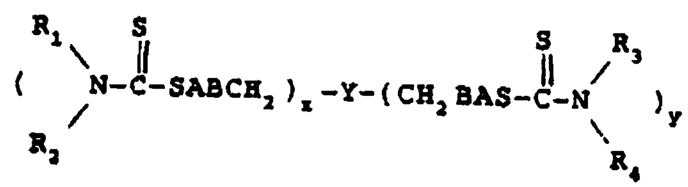

wherein
$R_1$, $R_2$, $R_3$, and $R_4$ are aliphatic or aromatic moieties which can be the same or different and which do not substantially interfere with the ability of I· to promote free radical polymerization or with the ability of T· to recombine with I· or a polymer free radical segment including I·;
Y is a linking group having a functionality of x+y which does not substantially interfere with the ability of I· to promote free radical polymerization or the ability of T· to recombine with I· or a polymer free radical segment including I·; and
x and y are each integers of at least 1 and the sum of x+y is not more than 12.

6. The copolymer of claim 1 further characterized by the representation by the formula

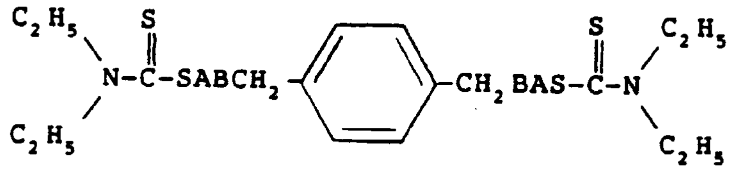

7. The copolymer of claim 1 further characterized by the selection of said iniferter from the group consisting of xylylene bis (N,N-diethyl dithiocarbamate) and xylylene bis (N-carbazolyl dithiocarbamate).

8. A sheet material further characterized by comprising the copolymer of claim 1.

9. A method of making a copolymer according to claim 1 further characterized by comprising the steps:
(a) mixing (1) an iniferter represented by the general formula $I(T)_n$ capable upon being subjected to an appropriate energy source of forming free radicals $I(\cdot)_n$ and nT· wherein n is an integer of at least 2, I· is a highly reactive free radical capable of initiating free radical polymerization, and T· is a less reactive free radical which is generally much less capable of initiating free radical polymerization than I· but will rejoin with $I(\cdot)_n$ or a free radical polymer segment free radically polymerized with $I(\cdot)_n$ upon termination of said energy source and (2) a first monomer charge selected from the group consisting of (i) acrylic monomer polymerizable to form an acrylic polymer block having a glass transition temperature of less than 0°C and (ii) monomer polymerizable to form a thermoplastic polymer block having a glass transition temperature of at least 50°C which is free radically polymerizable in the presence of $I(\cdot)_n$ to form a first polymer block;
(b) exposing the mixture of (a) to an energy source capable of forming free radicals $I(\cdot)_n$ and nT·;
(c) maintaining the exposure of (b) until said first monomer charge polymerizes with $I(\cdot)_n$ to form a free radical polymer segment represented by the formula $I(B\cdot)_n$ wherein B represents said first polymer block formed of said first mononer charge;
(d) terminating said exposure whereby to cause $I(B\cdot)_n$ and nT· to combine to form a polymer represented by the formula $I(BT)_n$;
(e) mixing $I(BT)_n$ with a second monomer charge which is the member of the group consisting of monomer (i) and monomer (ii) which was not selected as said first monomer comprising monomer which is free radically polymerizable in the presence of $I(B\cdot)_n$ to a second polymer block;
(f) exposing $I(BT)_n$ to an energy source capable of forming free radicals $I(B\cdot)_n$ and nT·;
(g) maintaining the exposure of (f) until said second monomer charge polymerizes with $I(B\cdot)_n$ to form a free radical block copolymer segment represented by the formula $I(BA\cdot)_n$ wherein A represents said second polymer block formed of said second monomer charge; and
(h) terminating the exposure of (f) whereby $I(BA\cdot)_n$ and nT· combine to form a block copolymer represented by the formula $I(BAT)_n$.

## Patentansprüche

1. Copolymer, gekennzeichnet durch die allgemeine Formel $I(BAT)_n$ , worin sind:
I der radikalische Startteil eines Iniferters der Formel $I(T)_n$ ;
T der Abbruchteil des Iniferters;
n ganzzahlig und mindestens zwei;
B ein erster, aus einer Gruppe ausgewählter Polymerblock, welche Gruppe umfaßt:
(i) einen elastischen Acrylpolymerblock mit einer Glasübergangstemperatur von weniger als 0 °C; und
(ii) einen normalerweise thermoplastischen Polymerblock mit einer Glasübergangstemperatur von mindestens 50 °C; und
A ein zweiter, aus einer Gruppe ausgewählter Polymerblock, welche Gruppe umfaßt: Polymerblock (i) und Polymerblock (ii), welche verschieden von dem ersten Polymerblock ausgewählt werden, , wobei das Gewichtsverhältnis des Acrylpolymerblocks zu dem thermoplastischen Polymerblock 5:95 bis 40:60 beträgt.

2. Copolymer nach Anspruch 1, ferner dadurch gekennzeichnet, daß der elastische Acrylpolymerblock aus einem Monomer gebildet wird, das mindestens einen monomeren Acryl- oder Methacrylsäureester eines

nichttertiären Alkohols aufweist, wobei der Alkohol 1 bis 14 Kohlenstoffatome mit einer mittleren Zahl von 4 bis 12 Kohlenstoffatomen hat.

3. Copolymer nach Anspruch 1, ferner dadurch gekennzeichnet, daß der monomere Acryl- oder Methacrylsäureester aus der Gruppe ausgewählt wird, welche aufweist: 2-Butylacrylat, Isooctylacrylat, 2-Ethylhexylacrylat, 2-Methylbutylacrylat und N-Butylacrylat.

4. Copolymer nach Anspruch 1, ferner gekennzeichnet durch die Bildung des thermoplastischen Polymerblocks eines Monomers, das aus einer Gruppe ausgewählt wird, die aufweist: Methylmethacrylat, Polystyrylethylmethacrylat-Makromer, Methylmethacrylat-Makromer, Acrylsäure, Acrylonitril, Isobornylmethacrylat, N-Vinylpyrrolidon, tert-Butylmethacrylat, Isopropylmethacrylat und deren Mischungen.

5. Copolymer nach Anspruch 1, dargestellt durch die Formel

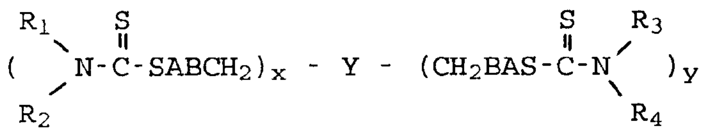

worin sind:

| | |
|---|---|
| $R_1$, $R_2$, $R_3$ und $R_4$ | aliphatische oder aromatische Gruppen, die gleich oder verschieden sein können und die im wesentlichen nicht die Fähigkeit des I· zur Förderung der Radikalpolymerisation oder die Fähigkeit von T· zur Rekombination mit I· oder einem radikalischen Polymersegment, einschließlich I·, beeinträchtigen; |
| Y | eine verbindende Gruppe mit einer Funktionalität von x+y, die im wesentlichen nicht die Fähigkeit des I· zur Förderung der Radikalpolymerisation oder die Fähigkeit von T· zur Rekombination mit I· oder einem radikalischen Polymersegment, einschließlich I·, beeinträchtigen; und |
| x und y | jeweils ganze Zahlen von mindestens 1, wobei die Summe von x und y nicht größer ist als 12. |

6. Copolymer nach Anspruch 1, ferner gekennzeichnet durch die Darstellung mit der Formel:

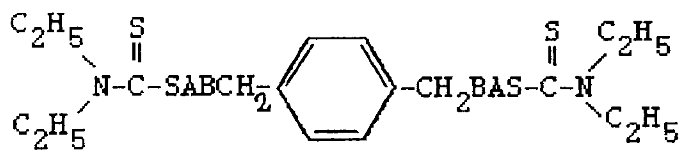

7. Copolymer nach Anspruch 1, ferner dadurch gekennzeichnet, daß der Iniferter aus der Gruppe ausgewählt wird, welche aufweist: Xylylen-bis-(N,N-diethyldithiocarbamat) und Xylylen-bis-(N-carbazolyldithiocarbamat).

8. Folienmaterial, ferner dadurch gekennzeichnet, daß es das Copolymer nach Anspruch 1 umfaßt.

9. Verfahren zur Herstellung eines Folienmaterials nach Anspruch 1, ferner dadurch gekennzeichnet, daß es folgende Schritte umfaßt:

(a) Mischen (1) eines Iniferters, der durch die Formel $I(T)_n$ dargestellt wird und der bei Exponieren an einer geeigneten Energiequelle Radikale $I(\cdot)_n$ und nT· bilden kann, wobei n eine ganze Zahl von mindestens 2 ist, I· ein hoch reaktionsfähiges Radikal, welches eine Radikalpolymerisation starten kann, und T· ein weniger reaktionsfähiges Radikal, welches im allgemeinen sehr viel weniger in der Lage ist, eine Radikalpolymerisation zu starten als I·, sich jedoch bei Abschalten der genannten Energiequelle mit $I(\cdot)_n$ oder einem radikalischem Polymersegment, das mit $I(\cdot)_n$ eine Radikalpolymerisation eingegangen ist, wiedervereinigen kann und (2) einer ersten Monomercharge, die aus der Gruppe ausgewählt wird, welche aufweist: (i) polymerisierbares Acrylmonomer, um einen Acrylpolymerblock mit einer Glasübergangstemperatur von weniger als 0 °C zu bilden und (ii) polymerisierbares Monomer, um einen thermoplastischen Polymerblock mit einer Glasübergangstemperatur von mindestens 50 °C zu bilden, der in Anwesenheit von I(·)n eine Radikalpolymerisation eingehen kann, um einen ersten Polymerblock

zu bilden;

(b) Exponieren der Mischung von (a) an einer Energiequelle, die in der Lage ist, Radikale $I(\cdot)_n$ und $nT\cdot$ zu bilden;

(c) Beibehalten der Exponierung von (b), bis die erste Monomercharge mit $I(\cdot)_n$ polymerisiert, um ein radikalisches Polymersegment zu bilden, welches durch die Formel $I(B\cdot)_n$ repräsentiert wird und worin B den aus der ersten Monomercharge gebildeten ersten Polymerblock darstellt;

(d) Beenden der Exponierung, wodurch eine Vereinigung von $I(B\cdot)_n$ und $nT\cdot$ bewirkt wird, um ein Polymer zu bilden, welches durch die Formel $I(BT)_n$ repräsentiert wird;

(e) Mischen von $I(BT)_n$ mit einer zweiten Monomercharge, die ein Vertreter aus der Gruppe ist, welche aufweist: Monomer (i) und Monomer (ii), welche verschieden von dem ersten Monomer ausgewählt werden und Monomer umfassen, das in Anwesenheit von $I(B\cdot)_n$ mit einem zweiten Polymerblock eine Radikalpolymerisation eingehen kann;

(f) Exponieren von $I(BT)_n$ an einer Energiequelle, die in der Lage ist, Radikale $I(\cdot)_n$ und $nT\cdot$ zu bilden;

(g) Beibehalten der Exponierung von (f), bis die zweite Monomercharge mit $I(B\cdot)_n$ polymerisiert, um ein radikalisches Blockcopolymersegment zu bilden, welches durch die Formel $I(BA\cdot)_n$ repräsentiert wird und worin A den aus der zweiten Monomercharge gebildeten zweiten Polymerblock darstellt; und

(h) Beenden der Exponierung von (f), wodurch eine Vereinigung von $I(BA\cdot)_n$ und $nT\cdot$ bewirkt wird, um ein Blockcopolymer zu bilden, welches durch die Formel $I(BAT)_n$ repräsentiert wird.

## Revendications

1. Un copolymère, caractérisé par la formule générale :
   $I(BAT)_n$
   dans laquelle
   I représente la portion formant l'initiateur de radicaux libres d'un iniferter de la formule $I(T)_n$ ;
   T représente la portion de terminaison de cet iniferter ;
   n est un nombre entier égal à au moins 2 ;
   B représente un premier bloc polymère choisi dans le groupe comprenant (i) un bloc polymère acrylique élastique ayant une température de transition vitreuse de moins de 0°C, et (ii) un bloc polymère normalement thermoplastique, ayant une température de transition vitreuse d'au moins 50 °C ; et
   A représente un second bloc polymère, qui est le membre du groupe constitué par le bloc polymère (i) et le bloc polymère (ii), qui n'a pas été choisi en tant que premier bloc polymère,
   le rapport en poids du bloc polymère acrylique au bloc thermoplastique dans le copolymère séquentiel étant de 5/95 à 40/60.

2. Copolymère suivant la revendication 1, caractérisé en outre en ce que le bloc polymère acrylique élastique est formé d'un monomère comprenant au moins un ester d'acide acrylique ou méthacrylique monomère d'un alcool non tertiaire, cet alcool comportant de 1 à 14 atomes de carbone, le nombre moyen des atomes de carbone étant de 4 à 12.

3. Copolymère suivant la revendication 2, caractérisé en outre par le choix de l'ester d'acide acrylique ou méthacrylique monomère dans le groupe comprenant l'acrylate de 2-butyle, l'acrylate d'isooctyle, l'acrylate de 2-éthylhexyle, l'acrylate de 2-méthylbutyle et l'acrylate de N-butyle.

4. Copolymère suivant la revendication 1, caractérisé en outre par la formation du bloc polymère thermoplastique précité en utilisant un monomère choisi dans le groupe comprenant le méthacrylate de méthyle, le méthacrylate de polystyryléthyle macromère, le méthacrylate de métyle macromère, l'acide acrylique, l'acrylonitrile, le méthacrylate d'isobornyle, la N-vinylpyrrolidone, le méthacrylate de t-butyle, le méthacrylate d'isopropyle et leurs mélanges.

5. Copolymère suivant la revendication 1, représenté par la formule

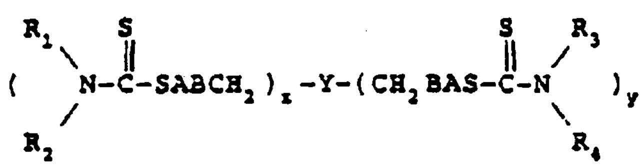

dans laquelle

$R_1$, $R_2$, $R_3$ et $R_4$ sont des fragments aliphatiques ou aromatiques qui peuvent être identiques ou différents et qui ne nuisent pas sensiblement à la capacité de I· à favoriser une polymérisation radicalaire ou à la capacité de T· de se recombiner avec I· ou un segment à radicaux libres de polymère incluant I·;

Y est un groupe de liaison ayant une fonctionnalité de x+y qui ne nuit sensiblement pas à la capacité de I· à favoriser une polymérisation radicalaire ou à la capacité de T· à se recombiner avec I· ou un segment à radicaux libres de polymère incluant I· ; et

x et y sont chacun des nombres entiers égaux à au moins 1, la somme de x + y n'étant pas supérieure à 12.

**6.** Copolymère suivant la revendication 1, caractérisé en outre en ce qu'il est représenté par la formule :

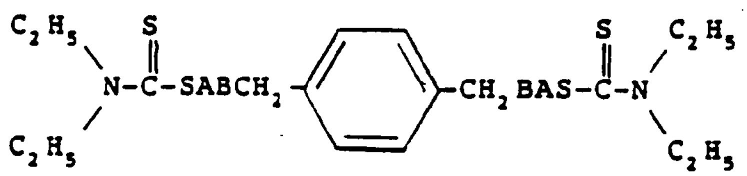

**7.** Copolymère suivant la revendication 1, caractérisé en outre par le choix de l'iniferter précité dans le groupe comprenant du xylylène-bis-(N,N-diéthyldithiocarbamate) et du xylylène-bis-(N-carbazolyldithiocarbamate).

**8.** Matière en feuille, caractérisée en ce qu'elle est constituée par le copolymère de la revendication 1.

**9.** Procédé de préparation d'un copolymère suivant la revendication 1, caractérisé en ce qu'il comprend les phases suivantes :

(a) le mélange de (1) d'un iniferter représenté par la formule générale $I(T)_n$ capable, lorsqu'il est soumis à une source d'énergie appropriée, de former des radicaux libres $I(\cdot)_n$ et nT·, dans lesquels n est un nombre entier égal à au moins 2, I· est un radical libre très réactif, capable d'amorcer une polymérisation radicalaire, et T· est un radical libre moins réactif, qui est généralement beaucoup moins capable d'amorcer une polymérisation radicalaire que I·, mais qui se joindra à $I(\cdot)_n$ ou à un segment de polymère à radicaux libres, ayant été soumis à une polymérisation radicalaire avec $I(\cdot)_n$ lors de l'arrêt de la source d'énergie citée, et (2) une première charge monomère choisie dans le groupe comprenant (i) un monomère acrylique polymérisable pour former un bloc polymère acrylique ayant une température de transition vitreuse inférieure à 0°C, et (ii) un monomère polymérisable pour former un bloc polymère thermoplastique ayant une température de transition vitreuse d'au moins 50°C et qui est susceptible d'une polymérisation radicalaire en présence de $I(\cdot)_n$ pour former un premier bloc polymère ;

(b) l'exposition du mélange suivant (a) à une source d'énergie capable de former des radicaux libres $I(\cdot)_n$ et nT· ;

(c) le maintien de l'exposition suivant (b) jusqu'à ce que cette première charge monomère polymérise avec $I(\cdot)_n$ pour former un segment de polymère à radicaux libres, représenté par la formule $I(B\cdot)_n$ dans laquelle B représente le premier bloc polymère formé de la première charge monomère susdite ;

(d) l'arrêt ou terminaison de l'exposition précitée, de manière à amener $I(B\cdot)_n$ et nT· à se combiner pour former un polymère représenté par la formule $I(BT)_n$ ;

(e) le mélange de $I(BT)_n$ avec une seconde charge monomère qui est le membre du groupe comprenant le monomère (i) et le monomère (ii), qui n'a pas été choisi en tant que premier monomère et qui consiste en un monomère qui est susceptible d'une polymérisation radicalaire en présence de $I(B\cdot)_n$ pour former un second bloc polymère ;

(f) l'exposition de $I(BT)_n$ à une source d'énergie capable de former des radicaux libres $I(B\cdot)_n$ et nT· ;

(g) le maintien de l'exposition suivant (f) jusqu'à ce que la seconde charge monomère polymérise avec $I(B\cdot)_n$ pour former un segment de copolymère bloc à radicaux libres, représenté par la formule $I(BA\cdot)_n$, dans laquelle A représente le second bloc polymère précité, formé de la seconde charge monomère ; et

(h) l'arrêt de l'exposition suivant (f) de manière à ce que $I(BA\cdot)_n$ et nT· se combinent pour former un copolymère bloc représenté par la formule $I(BAT)_n$.